Europäisches Patentamt

**European Patent Office**

**Office européen des brevets**

(11) Numéro de publication : **0 094 465**
**B1**

(12)

# FASCICULE DE BREVET EUROPÉEN

(45) Date de publication du fascicule du brevet :
**12.11.86**

(51) Int. Cl.⁴ : **E 04 B   2/86**, B 29 C 39/18

(21) Numéro de dépôt : **82400889.0**

(22) Date de dépôt : **14.05.82**

(54) **Procédé de préfabrication de panneaux de construction, panneaux réalisés et installation pour la mise en œuvre dudit procédé.**

(43) Date de publication de la demande :
**23.11.83 Bulletin 83/47**

(45) Mention de la délivrance du brevet :
**12.11.86 Bulletin 86/46**

(84) Etats contractants désignés :
**AT BE CH DE FR GB IT LI LU NL SE**

(56) Documents cités :
**DE-A- 2 339 188**
**FR-A- 2 494 326**
**US-A- 3 555 131**
**US-A- 3 825 163**

(73) Titulaire : **Alejos, Luis**
**Cadars**
**F-82700 Montech (FR)**

(72) Inventeur : **Alejos, Luis**
**Cadars**
**F-82700 Montech (FR)**

(74) Mandataire : **Barre, Philippe**
**Cabinet Barre-Gatti-Laforgue 95 rue des Amidonniers**
**F-31069 Toulouse Cédex (FR)**

EP 0 094 465 B1

Jouve, 18, rue St-Denis, 75001 Paris, France

## Description

L'invention concerne un procédé de préfabrication en usine de panneaux creux en vue de la réalisation sur chantier de constructions bénéficiant d'une isolation thermique. Elle s'étend aux panneaux réalisés ainsi qu'à une installation de préfabrication pour la mise en œuvre du procédé.

Les procédés de construction actuellement connus qui utilisent des panneaux préfabriqués présentent de graves inconvénients, provenant essentiellement du poids et de l'encombrement des panneaux préfabriqués qui sont disponibles sur le marché. Ces panneaux qui sont généralement pleins sont en effet réalisés en usine pour former des parties complètes de mur, intégrant les différents éléments de celui-ci et notamment la structure porteuse, le procédé de construction sur chantier consistant à juxtaposer plusieurs panneaux et à les assembler par des procédés divers. Ces panneaux sont extrêmement lourds et encombrants, exigent des engins de levage pour les manutentionner et posent fréquemment de difficiles problèmes d'accessibilité sur les chantiers. De plus, les joints entre panneaux sont difficiles à colmater cependant que l'application d'un enduit traditionnel sur leur surface est souvent problématique. Il faut remarquer que de telles constructions préfabriquées sont peu prisées par la clientèle qui recherche davantage des constructions de type plus traditionnel.

Dans ces conditions, de nombreux procédés de construction ont été proposés pour tenter de simplifier le travail de l'entrepreneur sur chantier, tout en réalisant des constructions ayant l'apparence du traditionnel. Ces procédés permettent généralement de réaliser des gains de temps notables en supprimant l'obligation de réaliser les coffrages traditionnels en bois ; toutefois, en particulier lorsqu'il s'agit de réaliser des constructions isolées sur le plan thermique, ces procédés exigent sur chantier l'exécution d'opérations délicates qui demandent une main-d'œuvre qualifiée et nécessitent la présence de machines spéciales dont ne disposent pas la plupart du temps les petits entrepreneurs.

Pour illustrer ce type de procédé, on peut par exemple se reporter au brevet US-A-4 104 842, aux demandes de brevet DE-A-1 804 657 ou encore FR-A-2 264 932 qui décrivent des procédés consistant à disposer, à l'emplacement du mur à réaliser, une armature formée par des barres porteuses fixées entre elles, à projeter du béton de chaque côté de celle-ci pour former des panneaux porteurs de part et d'autre de l'armature et à injecter ensuite un matériau d'isolation entre ces panneaux porteurs ; dans la demande de brevet FR-A-2 264 932, des couches de matériau isolant et des couches de matériau résistant sont successivement projetées pour obtenir un ensemble composite. Ces opérations de projection et d'injection qui sont exécutées sur chantier, constituent une entrave importante au développement de tels procédés.

D'autres procédés, tels que celui décrit dans la demande de brevet FR-A-2 344 691, ont également été proposés mais ces procédés sont mal adaptés à la réalisation de constructions isolées sur le plan thermique et deviennent dans ce cas de mise en œuvre sur chantier longues et délicates car ils exigent alors des opérations de mise en place du matériau isolant, qui sont en pratique d'exécution difficile.

Par ailleurs, il a été proposé dans les demandes de brevets FR-A-2 436 854 et FR-A-2 437 473 des panneaux creux préfabriqués, plus légers que les panneaux pleins déjà évoqués ; toutefois, la fabrication de ces panneaux en usine est relativement complexe et leur prix de revient est élevé. Un autre inconvénient des panneaux décrits dans la demande de brevet FR-A-2 436 854 réside dans leur poids qui reste notable du fait que ces panneaux comprennent au moins une plaque en béton armé. En outre, lorsque les panneaux décrits dans la demande de brevet FR-A-2 437 473 sont mis en œuvre, le béton coulé dans le volume creux de chaque panneau n'assure qu'une très mauvaise liaison entre les éléments constitutifs du panneau du fait de l'accrochage médiocre dudit béton sur la couche d'isolant.

Il a été également proposé un procédé de fabrication de panneaux selon le préambule de la revendication 1 constitués par une structure métallique tridimensionnelle dans laquelle est intégrée une couche isolante (brevet US-A-3 555 131) ; cette fabrication consiste notamment à faire défiler la structure sur une bande sans fin, à déposer une couche de sable sur ladite bande noyant une portion de ladite structure et à couler au-dessus une couche de matière isolante. On obtient ainsi une structure isolée légère qui peut être intégrée dans des constructions, en particulier en la noyant dans du béton qui est coulé sur chantier après mise en place de coffrages traditionnels ; on réalise ainsi des ouvrages à la fois armés et isolés mais la mise en œuvre sur chantier (et en particulier le coulage du béton) s'opère de façon traditionnelle.

La présente invention se propose d'apporter une solution nouvelle au problème de construction évoqué précédemment en fournissant un nouveau panneau préfabriqué, qui bénéficie d'un faible poids le rendant manipulable par un ou deux hommes sans engin de levage.

Un autre objectif essentiel de l'invention est de simplifier le travail de construction sur chantier et de permettre de réaliser des gains de temps importants, tout en autorisant l'exécution de ce travail par de petits entrepreneurs ne disposant pas de compétences particulières ou de machines spéciales pour réaliser les délicates opérations requises par certains procédés antérieurs (projections de matériaux porteurs ou injections ou projections de matériaux isolants).

Un autre objectif de l'invention est de réaliser des constructions bénéficiant d'une isolation thermique de bonne qualité et présentant les caractéristiques de constructions traditionnelles.

Un autre objectif essentiel de l'invention est d'indiquer un procédé de préfabrication permettant de réaliser en usine des panneaux de coût modéré, apte à assurer, une fois coulé le matériau porteur (sur chantier), un bon accrochage entre les éléments constitutifs du mur réalisé.

A cet effet, le procédé de préfabrication en usine des panneaux creux conformes à l'invention consiste :

à utiliser une structure tridimensionnelle composée de barres de poussée situées dans deux plans sensiblement parallèles, dits plans coffrants, et de barres de liaison reliant lesdites barres de poussée,

à disposer ladite structure tridimensionnelle dans un moule contenant un matériau pulvérulent de façon qu'une partie de l'épaisseur de la structure se trouve enfoncée dans ledit matériau et que l'autre partie dépasse au-dessus de celui-ci,

à mouler une matière synthétique isolante au-dessus du matériau pulvérulent,

et, après durcissement de la matière isolante, à extraire le matériau pulvérulent et à démouler le panneau obtenu.

Conformément à l'invention, ledit procédé est caractérisé en ce que la matière synthétique isolante, qui possède des propriétés adhésives au cours de son durcissement, est moulée dans le volume compris entre la surface supérieure du matériau pulvérulent et une plaque coffrante disposée au-dessus de la structure tridimensionnelle et maintenue au contact de celle-ci, cette matière isolante étant moulée à l'état liquide ou pâteux de façon à remplir entièrement le volume précité, en vue de noyer les barres de poussée du plan coffrant supérieur de la structure tridimensionnelle et une portion des barres de liaison de celle-ci, ladite matière isolante venant au contact avec la plaque coffrante précitée de façon à assurer l'adhérence de ladite plaque avec celle-ci.

De préférence, on utilise une matière synthétique isolante expansible, en particulier du polyuréthane, qui est amenée à s'expanser dans le volume précité en vue de remplir ce volume de mousse expansée ; plusieurs modes de mise en œuvre sont possibles et sont compris dans le cadre de l'invention.

Selon un premier mode de mise en œuvre, la matière isolante expansible est distribuée à l'état pâteux dans le moule au-dessus du matériau pulvérulent en quantité appropriée pour remplir après expansion le volume du moule, la plaque coffrante étant ensuite positionnée sur ledit moule avant la fin de l'expansion de ladite matière isolante.

Selon un autre mode de mise en œuvre, la matière isolante expansible est distribuée à l'état pâteux sur la plaque coffrante en quantité appropriée pour remplir après expansion le volume du moule, ladite plaque coffrante étant ensuite renversée sur le moule avant la fin de l'expansion de sorte que cette dernière se développe dans le volume fermé dudit moule.

Les deux modes de mise en œuvre ci-dessus évoqués peuvent être combinés : une partie de la matière isolante est alors distribuée à l'état pâteux dans le moule au-dessus du matériau pulvérulent et une partie est distribuée à l'état pâteux sur la plaque coffrante, ladite plaque étant ensuite renversée sur le moule de façon que les deux parties se rejoignent en cours d'expansion et remplissent de mousse expansée le volume fermé du moule.

Selon un autre mode de mise en œuvre, la plaque coffrante est mise en place sur le moule avant de distribuer la matière synthétique isolante, ladite matière étant ensuite injectée dans le volume fermé du moule par des orifices ménagés dans le moule.

Le procédé de l'invention permet d'obtenir un panneau creux comprenant :

une structure tridimensionnelle composée de barres de poussée situées dans deux plans coffrants sensiblement parallèles et de barres de liaison reliant lesdites barres de poussée et fixées sur celles-ci,

une plaque moulée en un matériau isolant, dans laquelle sont noyées les barres de poussée d'un des plans coffrants, ladite plaque présentant une épaisseur inférieure à celle de la structure tridimensionnelle de façon à préserver un espace libre du côté de l'autre plan coffrant,

et une plaque coffrante adhérant au niveau du premier plan coffrant contre la face correspondante de la plaque d'isolant.

Après démoulage, on fixe, de préférence en usine, une seconde plaque coffrante sur les barres de poussée du plan coffrant demeuré apparent ; cette seconde plaque peut être assujettie soit de façon amovible pour être ôtée et récupérée après coulage du béton sur chantier, soit de façon définitive (notamment par agrafage) pour servir de coffrage perdu. Elle peut présenter une structure ajourée et être en particulier formée par une plaque de métal déployé ou par un grillage.

La première plaque coffrante qui est mise en place lors du moulage du panneau est de préférence une plaque continue rigide présentant une surface externe de finition du type plaque de Placoplâtre (Marque déposée).

La structure tridimensionnelle qui peut être réalisée par des opérations très simples de pliage comme on le verra plus loin, est dimensionnée pour assurer le caractère indéformable du panneau, sans aucun rôle dans la résistance ultérieure de la construction réalisée, (cette fonction étant remplie par le matériau porteur qui est coulé sur chantier dans le volume creux du panneau). Ladite structure tridimensionnelle peut ainsi être extrêmement légère, de sorte que, en l'absence de tout élément compact ou dense, le panneau conforme à l'invention présente un poids réduit et peut s'étendre sur plusieurs mètres carrés tout en étant manutentionnable par un ou deux hommes.

La mise en œuvre sur chantier consiste à disposer les panneaux en positions juxtaposées et à couler de façon traditionnelle du béton dans le volume creux délimité par les couches d'isolant et les secondes plaques coffrantes des panneaux juxtaposés. La finition des surfaces apparentes est ensuite assurée par des procédés traditionnels (application de crépis, de plâtre...) et ce, sans nécessité de ménager des joints apparents.

Par ailleurs, lors du moulage du panneau en usine, on utilise de préférence dans le moule de préfabrication, un matériau pulvérulent à base de sable et d'agrégats du type tout-venant : après démoulage, la surface libre interne de la matière isolante présente ainsi un état granuleux, par adhésion et enrobage partiel de particules dudit matériau pulvérulent sur ladite matière isolante. Lors du coulage du béton sur chantier, une telle surface assure une excellente liaison entre le béton et la couche isolante des panneaux.

L'invention s'étend à une installation de préfabrication pour la mise en œuvre du procédé défini précédemment. Ladite installation comprend essentiellement au moins un moule doté de joues verticales et des moyens de distribution de matière synthétique isolante ; l'installation se caractérise en ce que le moule est équipé d'un fond doté, d'une part, de volets d'ouverture mobiles pour l'évacuation du matériau pulvérulent, d'autre part, de moyens de soutien d'une structure tridimensionnelle par son plan coffrant inférieur.

Ladite installation peut en outre être complétée par un dispositif de pliage en vue de la réalisation d'une structure tridimensionnelle à partir d'un treillis ; selon la présente invention, ce dispositif de pliage comprend essentiellement une pluralité de chariots articulés les uns à la suite des autres par des axes parallèles, des moyens de support desdits chariots guidant ceux-ci en translation perpendiculairement à la direction de leurs axes d'articulation, plusieurs organes d'entraînement chacun adaptés pour permettre de faire pivoter un couple de chariots voisins par rapport aux chariots contigus afin de donner à l'ensemble des chariots le profil d'une ligne brisée, et des moyens de verrouillage des barres à plier sur chacun des chariots.

Comme on le comprendra mieux plus loin, un tel dispositif de pliage se différencie, de par son principe de fonctionnement, des dispositifs connus ayant le même but (notamment brevet US-A-3 825 163, brevet BE-A-720 451 ou brevet DE-C-1 912 676) et permet d'effectuer le pliage des barres avec des puissances modérées, sans étirement du métal, tout en présentant une structure simple et un coût modéré ; de plus, une fois les barres pliées, le dispositif sert de gabarit sur lequel la structure peut rester positionnée pour souder sur celle-ci des barres de raidissement rendant ladite structure tridimensionnelle définitivement indéformable.

L'invention ayant été exposée dans sa forme générale, d'autres caractéristiques, buts et avantages de celle-ci se dégageront de la description qui suit en regard des dessins annexés ; sur ces dessins qui font partie intégrante de la présente description :

la figure 1 est une vue en coupe par un plan vertical d'un mode de réalisation de panneau creux préfabriqué conforme à l'invention,

la figure 2 est une vue schématique partielle de la structure tridimensionnelle de ce panneau,

la figure 3 est une vue schématique en perspective partielle de ce panneau, montrant deux modes de fixation possibles de la seconde plaque coffrante,

les figures 4 et 5 sont des vues schématiques de détail de chacun de ces modes de fixation respectivement en coupe par des plans A et B,

les figures 6a et 6b illustrent le principe de moulage dudit panneau,

la figure 7 est une vue schématique en coupe verticale par un plan CC d'un moule pour le moulage d'un panneau conforme à l'invention,

la figure 8 est une vue dudit moule en coupe verticale par un plan DD orthogonal au précédent, le panneau-couvercle étant supposé en position ouverte,

la figure 9 est une vue schématique d'une installation de moulage comportant deux moules du type de celui représenté aux figures 7 et 8,

la figure 10 est une coupe de détail par un plan EE de ladite installation,

la figure 11 présente en coupe partielle verticale par un plan FF un mode de réalisation d'un dispositif de pliage permettant la fabrication d'une structure du type de celle schématisée à la figure 2,

la figure 12 est une vue de dessus de ce dispositif de pliage,

la figure 13 en est une coupe verticale partielle, le dispositif étant supposé en cours de fonctionnement,

les figures 14 et 15 en sont des coupes de détail par un plan G, le dispositif étant supposé respectivement en position verrouillée et en position déverrouillée.

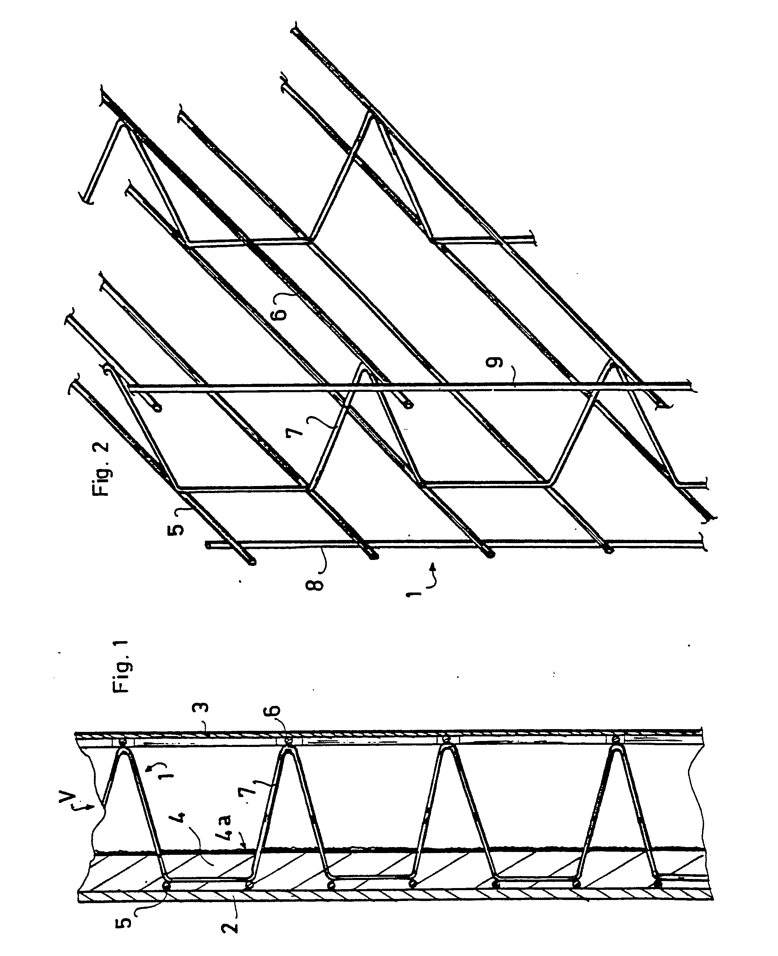

Le panneau creux préfabriqué représenté à titre d'exemple à la figure 1 est destiné à permettre la construction de murs par de simples opérations traditionnelles de coulage de béton et de finition de surfaces externes.

Ce panneau réalisé en usine selon un procédé décrit en détail plus loin comporte une structure tridimensionnelle 1 qui relie deux plaques coffrantes 2 et 3 ; la plaque coffrante 2 est reliée à cette structure par l'entremise d'une plaque d'isolant 4, en particulier en mousse de polyuréthane, laquelle adhère sur la face interne de la plaque coffrante 2 et enrobe une partie des barres de la structure tridimensionnelle 1.

La structure 1 est une structure légère, qui ne participe à la résistance de l'ouvrage appelé à être réalisé au moyen du panneau, et possède pour seule fonction d'assurer l'indéformabilité du panneau pendant les transferts et manutentions et de maintenir la plaque 3 à une distance constante de l'ensemble plaque d'isolant 4/première plaque coffrante 2.

Ainsi, le panneau délimite un volume intérieur creux d'épaisseur sensiblement constante entre la surface libre 4a de sa plaque isolante 4 et la surface interne de la seconde plaque coffrante 3. Comme on le verra plus loin, le procédé de fabrication du panneau permet de réaliser une surface libre 4a qui présente un état granuleux avec des particules d'agrégats partiellement noyées en surface, de façon à autoriser un excellent accrochage avec le béton ultérieurement coulé sur chantier dans le volume creux V du panneau.

La première plaque coffrante 2 est en l'exemple une plaque continue qui peut en particulier être en placoplâtre afin de réaliser la surface interne du mur ; bien entendu, d'autres matériaux connus peuvent être prévus en fonction de l'application envisagée.

La seconde plaque coffrante 3 peut être continue ou ajourée, et être en particulier constituée par une plaque de métal déployée ou une fine plaque nervurée en matière synthétique. Cette plaque coffrante 3 est fixée sur la structure tridimensionnelle 1 pour tout moyen, soit en position définitive pour servir de coffrage perdu qui sera habillé lors des opérations de finition, soit en position amovible pour être récupérée après coulage du béton dans le volume V du panneau.

La structure tridimensionnelle 1 peut être réalisée en tout matériau apte à lui permettre d'assurer la fonction de maintien évoquée plus haut, tout en lui conférant un poids réduit.

Cette structure peut en particulier être réalisée à partir d'un treillis métallique, plié comme on le verra plus loin pour lui donner la forme schématisée à la figure 2. Dans cette forme de réalisation, la structure comprend une pluralité de barres de poussée horizontales 5 et 6 formant deux nappes disposées dans deux plans parallèles, dits plans coffrants. Les barres de poussée 5 d'un des plans coffrants sont reliées aux barres de poussée 6 de l'autre plan coffrant par des barres de liaison 7 qui forment des plis en forme de V. En l'exemple, les barres de liaison ont un profil constitué par une succession de trapèzes (sans base), mais d'autres formes peuvent être prévues et notamment un profil constitué par une succession de triangles (sans base).

Une telle structure peut être obtenue à partir d'un treillis composé de deux familles de barres sécantes, en pliant les barres d'une des familles (appelées à jouer le rôle de barres de liaison) au niveau de leurs intersections avec les barres de l'autre famille (appelées à jouer le rôle de barres de poussée) de façon à former les deux nappes de barres de poussée entretoisées par les barres de liaison.

Après pliage, les barres de poussée (5 et 6) de chaque nappe sont liées à des barres de raidissement 8 ou 9 qui rendent la structure indéformable et suppriment tout risque d'ouverture des plis des barres de liaison. Selon les dimensions du panneau à fabriquer, deux ou trois barres de raidissement par nappe suffisent pour assurer cette fonction de verrouillage.

Le panneau ci-dessus décrit est composé d'éléments légers, qui lui confèrent un poids d'ensemble réduit permettant de le transporter et de le manipuler très aisément sans engin de levage. Sa mise en œuvre sur chantier autorise des gains de temps notables, en supprimant l'exécution des coffrages traditionnels ; il suffit de juxtaposer les panneaux pour couvrir les surfaces à bâtir et de couler du béton (béton de ciment, béton caverneux, béton armé etc.) dans les volumes creux des panneaux. Cette mise en œuvre ne requiert aucune opération d'injection de matière isolante ou de projection sous pression et est à la portée de tout entrepreneur équipé d'un matériel traditionnel. Après coulage du béton, le panneau préfabriqué forme avec l'épaisseur de béton un mur monobloc (en particulier grâce à l'excellente liaison qu'autorise la surface granuleuse de la plaque d'isolant), mur qui présente les caractéristiques d'un mur traditionnel.

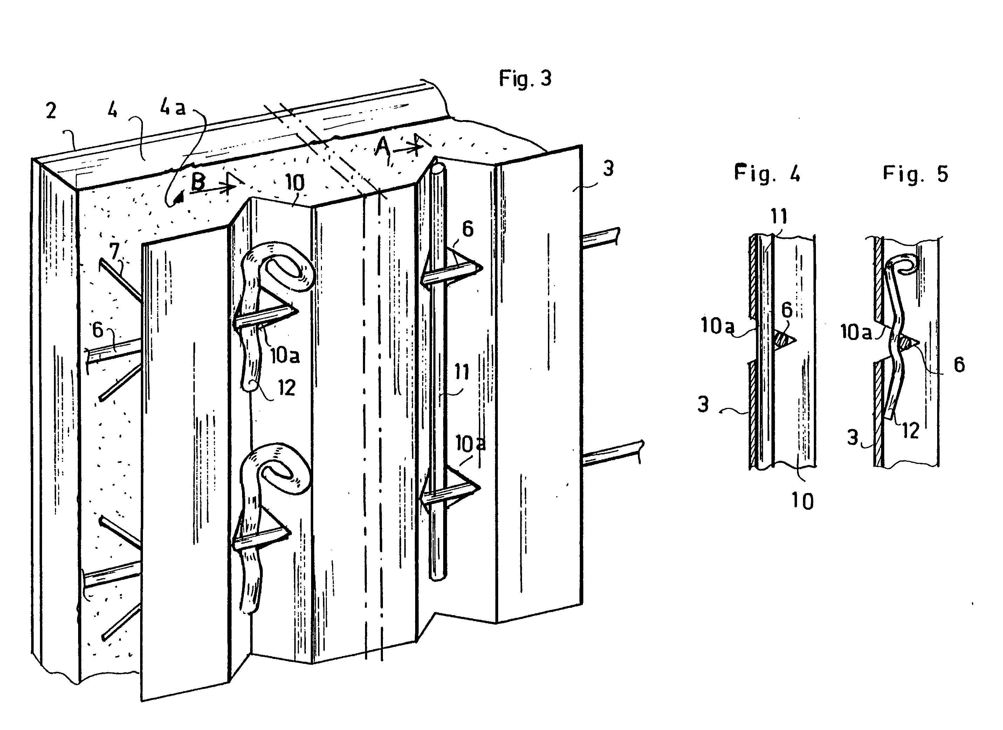

Les figures 3, 4 et 5 représentent des modes de réalisation de fixation de la plaque coffrante 3. Dans ces exemples, on utilise une plaque coffrante possédant des nervures telles que 10 dotées d'ouvertures 10a. Ces nervures en forme de U ou de V peuvent être d'origine ou être obtenues par déformation de la plaque, notamment dans le cas de métal déployé, grille, tôle..., les ouvertures 10a étant réalisées à l'emporte-pièce ou par meulage transversal desdites nervures.

La partie droite de la figure 3 et de la figure 4 montrent une fixation réalisée par un organe de clavetage, constitué par de simples barres verticales 11 ; les nervures de la plaque 3 sont amenées à chevaucher au niveau de leurs ouvertures 10a, les barres de poussée 6 de la structure tridimensionnelle et les barres de clavetage 11 sont introduites dans lesdites nervures de façon à passer à l'arrière des barres 6.

La partie gauche de la figure 3 et la figure 5 montrent une autre fixation, réalisée au moyen de clavettes 12 positionnées de façon analogue au cas précédent. En l'exemple, ces clavettes possèdent une tige ayant une forme telle que représentée à la figure 5 en vue de faire office de ressort écartant chaque barre de poussée 6 du fond de la nervure 10. Chaque clavette 12 possède en outre une boucle qui permet de l'enlever par traction, de sorte que la plaque de coffrage 3 peut être aisément récupérée sur chantier après le coulage et la prise du béton. Cette fixation est notamment intéressante pour des plaques de coffrage de prix plus élevé (plaques continues en tôle ou matière synthétique), afin de réduire le coût de la construction. La couche de finition est alors directement appliquée sur la face apparente du béton coulé dans les panneaux.

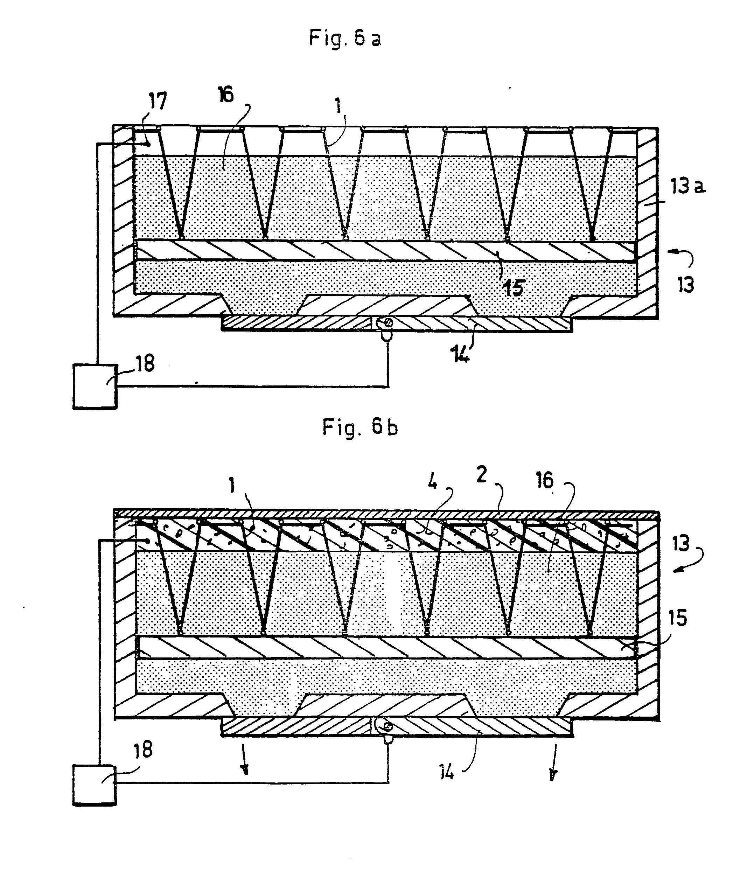

Les figures 6a et 6b schématisent, sur le plan des principes, la préfabrication d'un panneau conforme à l'invention, dans un moule 13 composé de joues latérales verticales 13a et d'un fond doté de volets d'ouverture mobiles 14 pour l'évacuation du matériau pulvérulent et de moyens de soutien 15 de la structure tridimensionnelle (ces moyens 15 peuvent être constitués par le fond même du moule ou, comme on le verra plus loin, dans une forme de réalisation préférentielle, par des poutrelles s'étendant dans le moule à l'aplomb des plans contenant les barres de liaison de la structure tridimensionnelle).

Le procédé consiste à disposer dans le moule 13, une structure tridimensionnelle 1 et à noyer partiellement celle-ci dans un matériau pulvérulent 16 à base de sable et d'agrégats du type tout venant (figure 3a). La partie de la structure 1 qui dépasse au-dessus du matériau pulvérulent 16 est destinée à être noyée dans la mousse de polyuréthane expansé.

Le polyuréthane 4 est ensuite amené à s'expanser au-dessus du matériau pulvérulent 16 et la plaque coffrante 2 est disposée au-dessus du moule pour coiffer celui-ci et fermer le volume d'expansion du polyuréthane (figure 3b).

Le polyuréthane peut être distribué directement dans le moule 13 au-dessus du matériau pulvérulent 16 avant la mise en place de la plaque coffrante 2 ou être distribué sur la plaque coffrante supportée par un panneau-couvercle qui est ensuite rabattu au-dessus du moule, les deux processus pouvant être combinés.

Il est également possible de fermer le moule au moyen de la plaque coffrante 2 avant la distribution de polyuréthane, cette distribution étant faite ensuite par injection à travers des orifices ménagés dans les joues verticales 13a du moule.

La quantité de polyuréthane distribuée est prévue pour engendrer un remplissage du volume vide du moule par de la mousse expansée, celle-ci venant au contact du panneau coffrant 2 de façon à adhérer à celui-ci du fait de ses propriétés adhésives.

Une sonde de pression 17 peut être prévue dans le volume creux du moule pour permettre une mesure de la pression en fin d'expansion (cette sonde peut également être associée à la plaque coffrante 2 afin de mesurer directement la pression s'exerçant sur celle-ci en fin d'expansion). Cette sonde 17 est reliée à un système de commande symbolisé en 18, permettant de provoquer une ouverture progressive des volets 14 par l'entremise d'un organe de manœuvre de type classique commandé par le système 18. On engendre ainsi une évacuation du matériau pulvérulent au-delà d'un seuil de pression prédéterminé dans le moule (de l'ordre par exemple de 0,1 à 0,2 bar relatif) ; de la sorte, par un léger abaissement de la surface du matériau pulvérulent, on écarte les risques de soulèvement de la plaque coffrante 2, qui reste constamment au contact du plan coffrant supérieur de la structure tridimensionnelle 1.

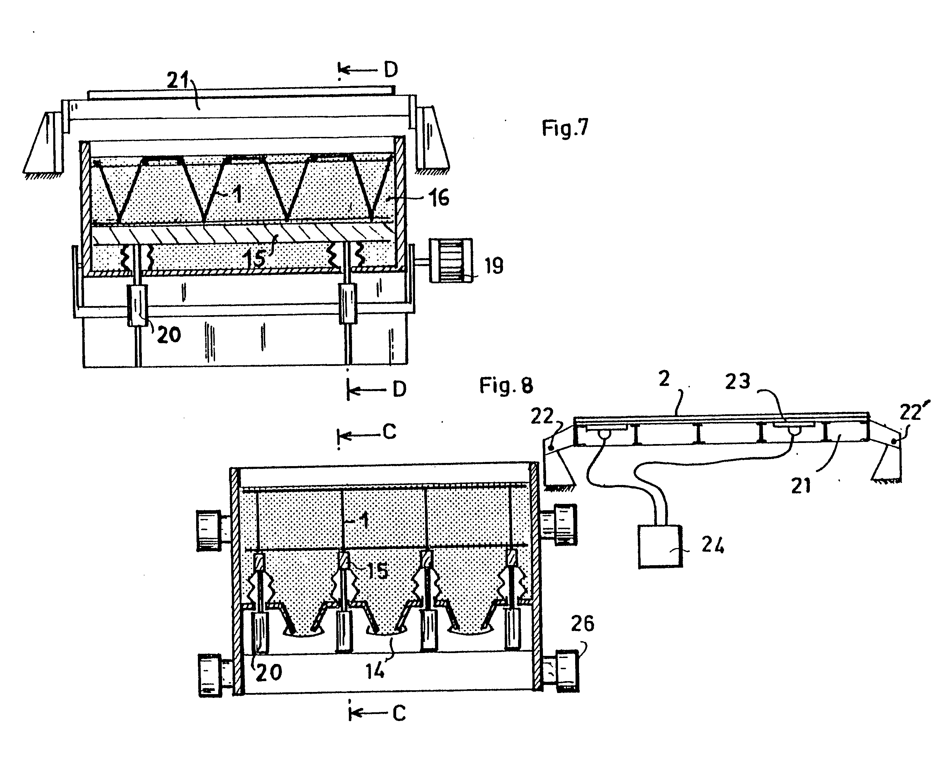

Les figures 7, 8, 9 et 10 présentent un mode de réalisation d'installation de moulage, permettant la mise en œuvre du procédé décrit ci-dessus.

En l'exemple, cette installation comprend deux moules du type de celui représenté aux figures 7 et 8. On a repris sur ces figures des références identiques à celles des figures précédentes pour désigner les mêmes éléments. On y retrouve en particulier, en 14 les volets d'ouverture pour l'évacuation du matériau pulvérulent, qui sont commandés (par l'entremise d'un système mécanique classique) par un moteur 19, et en 15 les poutrelles de soutien de la structure tridimensionnelle 1 qui sont portées par des tiges mobiles de vérin 20 agencés pour permettre de soulever ces poutrelles à l'intérieur du moule (des soufflets de protection évitent au matériau pulvérulent de venir au contact des tiges 20).

Les moules sont associés à un panneau-couvercle 21 qui est adapté pour pouvoir supporter une plaque coffrante 2 ; ce panneau-couvercle est agencé pour pouvoir être rabattu sur le moule avec un renversement de 180°.

En l'exemple, le même panneau-couvercle est utilisé pour les deux moules et le rabattement peut être effectué soit autour d'une broche amovible 22, lorsque celle-ci est mise en place d'un côté du panneau-couvercle, soit autour d'une broche 22' mise en place de l'autre côté.

En outre, le panneau-couvercle 21 est équipé de moyens de retenue de la plaque coffrante posée sur celui-ci. Ces moyens peuvent être constitués par des ventouses 23 reliées à une source d'aspiration 24.

Le procédé de préfabrication du panneau au moyen de tels moules consiste à disposer, d'abord, la structure tridimensionnelle 1 dans le moule vide sur les poutrelles 15 placées en position basse, le moule ayant une hauteur supérieure à l'épaisseur de ladite structure ; les volets 14 étant fermés, le matériau pulvérulent 16 est ensuite versé dans le moule jusqu'à enrober la structure tridimensionnelle sur toute sa hauteur. La surface du matériau pulvérulent 16 peut alors être commodément lissée de façon à être horizontale et sensiblement plane. Les poutrelles 15 sont ensuite manœuvrées pour soulever la structure à l'intérieur du moule de façon à amener sa partie supérieure à émerger du matériau pulvérulent et à affleurer la face supérieure du moule. La distribution de polyuréthane expansible peut alors être assurée comme précédemment décrit, soit directement dans le moule, soit au-dessus de la plaque coffrante 2, soit en combinant les deux processus.

Après rabattement du panneau-couvercle 21 et expansion complète et durcissement du polyuréthane, la source d'aspiration 24 est coupée ; le panneau-couvercle 21 est soulevé et les volets 14 ouverts pour l'évacuation du matériau pulvérulent 16, en vue du démoulage du panneau préfabriqué.

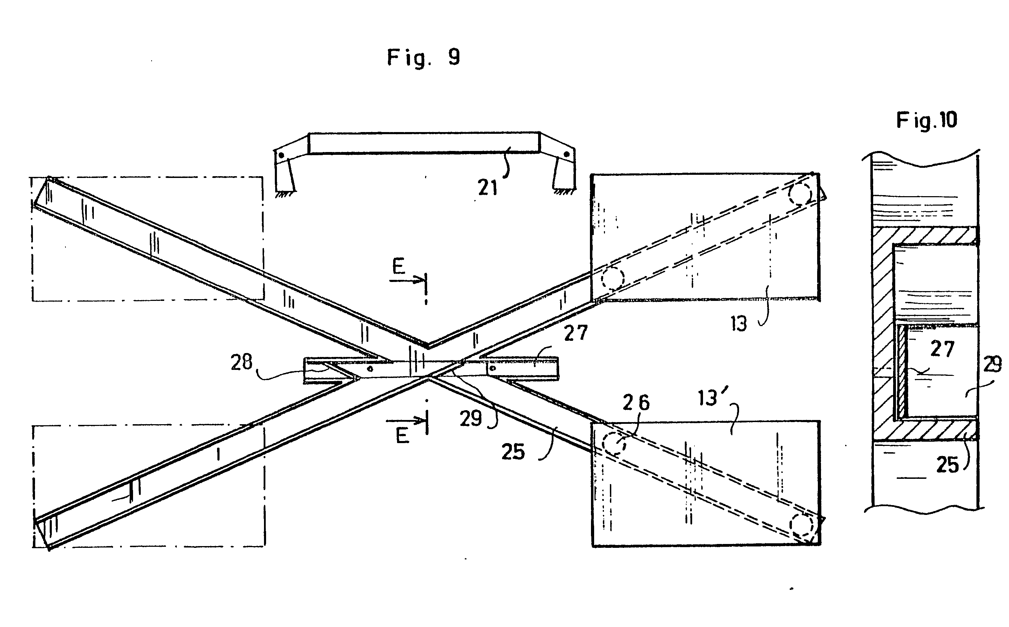

Pour éviter des manutentions importantes de matériau pulvérulent, deux panneaux sont moulés en alternance dans les deux moules de l'installation (qui sont schématisés en 13 et 13' à la figure 9), ces moules étant disposés, tour à tour, l'un au-dessus de l'autre (traits pleins ou traits discontinus) de sorte que le matériau pulvérulent extrait du moule supérieur en fin de fabrication du panneau correspondant s'écoule dans le moule inférieur en vue de commencer la fabrication de l'autre panneau.

A cet effet, les moules 13 et 13' sont portés par des moyens de guidage adaptés pour permettre de les superposer, de sorte que l'un des moules puisse être disposé soit au-dessus, soit au-dessous de l'autre. Bien entendu, de nombreux systèmes sont possibles et les figures 9 et 10 n'en présentent qu'un exemple non limitatif.

Dans cet exemple, chaque moule est équipé sur ses joues latérales de galets externes 26 qui circulent dans des profilés en U25 formant un chemin de roulement en forme de X. Au croisement, une réglette coulissante 27 pourvue de deux plaquettes inclinées 28 et 29 permet de réaliser la continuité du chemin de roulement d'un profilé ou de l'autre.

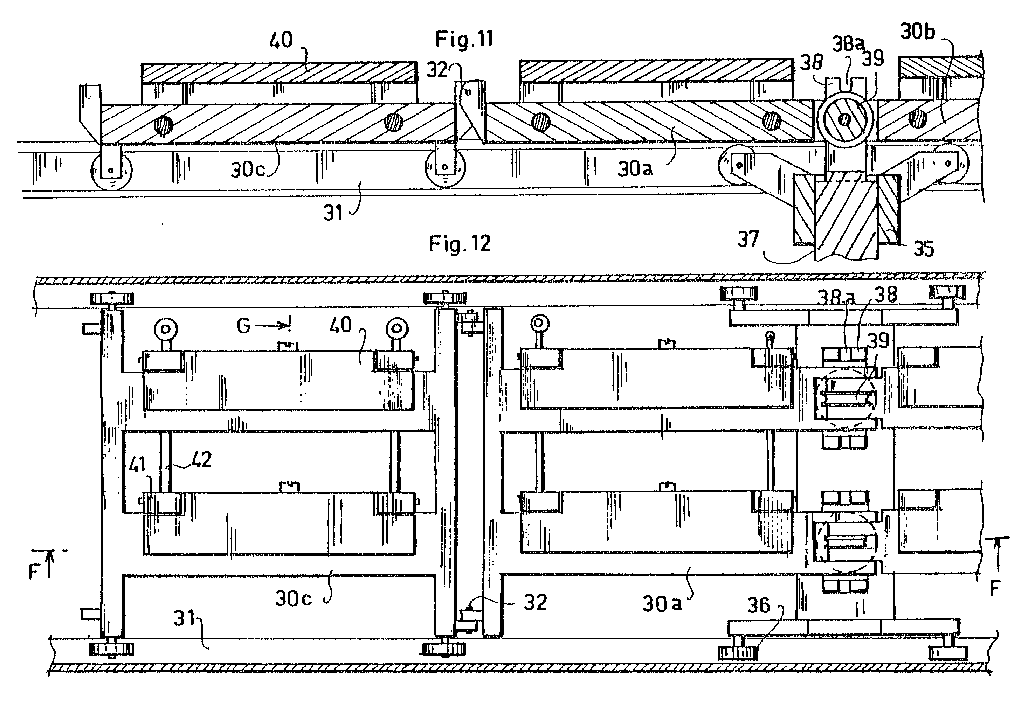

Par ailleurs, l'installation de préfabrication comprend de préférence un dispositif de pliage perfectionné du type de celui représenté aux figures 11, 12, 13, 14 et 15, en vue de réaliser une structure tridimensionnelle à partir d'un treillis composé de deux familles de barres perpendiculaires.

Ce dispositif comprend une pluralité de chariots, tels que 30, en nombre égal au nombre de segments rectilignes des barres de liaison de la structure à réaliser. Ces chariots sont portés par des chemins de roulement 31 qui leur permettent de se déplacer le long d'une direction longitudinale parallèle à la ligne de chariots, tout en leur laissant la faculté d'être soulevés. Un seul chariot disposé à l'extrémité de la ligne est bloqué dans le sens longitudinal. En outre, les chariots 30 sont articulés les uns à la suite des autres par des axes 32, perpendiculaires à la direction longitudinale précitée.

Les couples de chariots tels que 30a et 30b, correspondant à l'emplacement d'un pli en V à réaliser sur les barres de liaison de la structure tridimensionnelle sont associés à des organes d'entraînement permettant de les faire pivoter par rapport aux chariots contigus (en l'exemple 30c et 30d) afin de pouvoir donner à la ligne de chariots le profil d'une ligne brisée correspondant au profil des barres de liaison de la structure.

En l'exemple, chaque organe d'entraînement d'un couple de chariots 30a, 30b, comprend un vérin de faible course 33 agencé pour agir perpendiculairement à la ligne de chariot en vue d'amorcer le soulèvement des deux chariots et un vérin 34 attelé sur les chariots contigus 30c, 30d, pour pouvoir agir dans le sens du rapprochement ou de l'écartement de ces chariots.

Le vérin de faible course 33 est porté par le fond d'un fourreau de guidage 35, lui-même supporté par des moyens de roulement 36 coopérant avec les chemins de roulement 31 ; ce fourreau 35 guide une colonne verticale 37 sur laquelle peut agir le vérin 33 lorsqu'elle se trouve en position basse.

Cette colonne 37 située à l'aplomb de l'articulation entre les deux chariots 30a et 30b se prolonge en partie haute par une fourche 38 qui est liée à l'axe d'articulation entre les chariots. Cette fourche comprend, sur ses branches, des rainures telles que 38a perpendiculaires à la direction longitudinale des chariots de façon à pouvoir contenir et guider les barres de poussée de la structure tridimensionnelle ; ainsi, la fourche 38 forme un organe de guidage à l'égard de ces barres et maintient celles-ci pendant le pliage.

En outre, des galets à gorge 39 sont disposés au niveau de l'articulation entre les deux chariots 30a et 30b afin de guider les barres de liaison au sommet de leurs plis.

Par ailleurs, les chariots 30 sont équipés de moyens de verrouillage des barres de liaison permettant de stabiliser celles-ci sur lesdits chariots au cours du pliage.

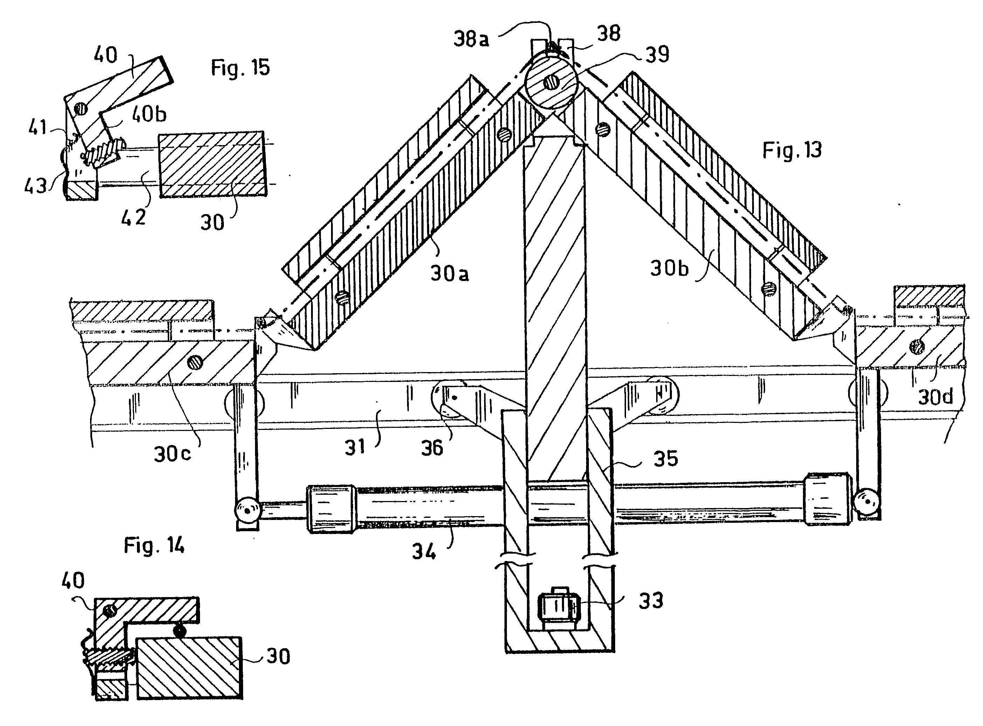

En l'exemple représenté, ces moyens sont constitués par des plaquettes 40 ayant chacune un retour 40b situé en regard du bord du chariot considéré (ou du bord d'ouvertures ménagées dans celui-ci). Chaque plaquette 40 est articulée sur un support 41 de façon à pouvoir pivoter vers le haut (Figure 15) ou vers le bas (Figure 14), ce support 41 étant lui-même porté par des tiges coulissantes 42 qui permettent de l'écarter ou de le rapprocher du chariot.

La plaquette 40 peut ainsi être disposée dans la position de verrouillage schématisée à la figure 14 pour maintenir les barres de liaison en appui contre le chariot correspondant ou dans la position d'ouverture schématisée à la figure 15 pour dégager ces barres. Un ressort 43 assure le pivotement de la plaquette 40 vers le haut lors de l'ouverture. En outre, un organe de blocage (non représenté) est prévu pour maintenir la plaquette en position de verrouillage.

Le pliage est effectué au moyen du dispositif ci-dessus décrit par le procédé suivant : les chariots 30 étant alignés sur les chemins de roulement et les plaquettes 40 en position d'ouverture, le treillis est posé sur lesdits chariots, de sorte que les barres appelées à constituer les barres de poussée passent dans les rainures 38a des fourches 38 et que les barres perpendiculaires, appelées à constituer les barres de liaison, reposent sur les chariots et passent dans les gorges des galets 39. Bien entendu, la largeur des chariots correspond à celle du treillis et ceux-ci comportent autant de plaquettes 40, galets 39 et fourches 38 qu'il existe de barres de liaison dans le treillis.

Les plaquettes 40 situées à proximité du chariot fixe d'extrémité sont verrouillées et le premier pli peut être réalisé en actionnant les vérins 33 et 34 correspondants ; au cours de la formation de ce pli, les chariots aval se déplacent le long des chemins de roulement dans la direction du pli.

De proche en proche, on réalise ainsi tous les plis du treillis.

En fin de pliage, le treillis qui a pris la forme de la structure tridimensionnelle schématisée à la figure 2, se trouve maintenu sur le dispositif dans sa forme définitive. Les barres de raidissement 8 et 9 peuvent alors être soudées, la structure n'étant enlevée du dispositif de pliage qu'après cette opération qui la stabilise dans son état définitif.

Le mode de mise en œuvre consistant à soulever la structure tridimensionnelle pour en faire émerger une partie au-dessus du matériau pulvérulent peut subir des modifications, le déplacement relatif entre structure et matériau pulvérulent étant obtenu en abaissant la surface de ce dernier, par exemple au moyen d'un moule à fond mobile, dans lequel la structure est maintenue immobile.

## Revendications

1. Procédé de préfabrication en usine d'un panneau creux en vue de la réalisation sur chantier de constructions isolées, ledit procédé étant du type consistant :

à utiliser une structure tridimensionnelle (1) composée de barres de poussée (5, 6) situées dans deux plans sensiblement parallèles, dits plans coffrants, et de barres de liaison (7) reliant lesdites barres de poussée,

à disposer ladite structure tridimensionnelle (1) dans un moule (13) contenant un matériau pulvérulent (16) de façon qu'une partie de l'épaisseur de la structure se trouve enfoncée dans ledit matériau et que l'autre partie dépasse au-dessus de celui-ci,

à mouler une matière synthétique isolante (4) au-dessus du matériau pulvérulent (16),

et, après durcissement de la matière isolante, à extraire le matériau pulvérulent (16) et à démouler le panneau obtenu, ledit procédé étant caractérisé en ce que la matière synthétique isolante (4), qui possède des propriétés adhésives au cours de son durcissement, est moulée dans le volume compris entre la surface supérieure du matériau pulvérulent (16) et une plaque coffrante (2) disposée au-dessus de la structure tridimensionnelle (1) et maintenue au contact de celle-ci, cette matière isolante (4) étant moulée à l'état liquide ou pâteux de façon à remplir entièrement le volume précité, en vue de noyer les barres de poussée (5) du plan coffrant supérieur de la structure tridimensionnelle (1) et une portion des barres de liaison (7) de celle-ci, ladite matière isolante (4) venant au contact avec la plaque coffrante (2) précitée de façon à assurer l'adhérence de ladite plaque avec celle-ci.

2. Procédé de préfabrication selon la revendication 1, caractérisé en ce que la matière isolante est une matière expansible distribuée à l'état pâteux sur la plaque coffrante (2) en quantité appropriée pour remplir après expansion le volume du moule, ladite plaque coffrante étant ensuite renversée sur le moule, avant la fin de l'expansion, de sorte que cette dernière se développe dans le volume fermé dudit moule.

3. Procédé de préfabrication selon la revendication 1, caractérisé en ce que la plaque coffrante (2) est mise en place sur le moule avant de distribuer la matière synthétique isolante (4), ladite matière étant ensuite injectée dans le volume fermé du moule par des orifices ménagés dans ledit moule.

4. Procédé de préfabrication selon l'une des revendications 1, 2 ou 3, dans lequel la structure tridimensionnelle (1) est d'abord disposée dans le moule vide prévu de hauteur supérieure à l'épaisseur de ladite structure, caractérisé en ce que le matériau pulvérulent (16) est ensuite versé dans le moule de façon à enrober la structure tridimensionnelle (1) sur toute sa hauteur, ladite structure (1) étant ensuite déplacée par rapport au matériau pulvérulent (16) de façon à amener sa partie supérieure à émerger du matériau pulvérulent (16).

5. Procédé de préfabrication selon l'une des revendications 1, 2, 3 ou 4, dans lequel l'on utilise un matériau pulvérulent (16) à base de sable, caractérisé en ce que l'on choisit le matériau pulvérulent (16) à base de sable du type tout venant contenant également des agrégats, de façon que la surface libre interne (4a) de la matière isolante (4) présente, après démoulage, un état granuleux, par adhésion de particules et agrégats du matériau pulvérulent sur ladite matière isolante (4).

6. Procédé de préfabrication selon l'une des revendications précédentes, caractérisé en ce qu'en fin d'expansion de la matière synthétique, on mesure la pression de ladite matière et on engendre une évacuation de matériau pulvérulent (16) au-delà d'un seuil de pression prédéterminé.

7. Procédé de préfabrication selon l'une des revendications précédentes, dans lequel la structure tridimensionnelle (1) est obtenue par pliage d'un treillis composé de deux familles de barres sécantes, les barres de l'une des familles appelées à jouer le rôle de barres de liaison (7) étant pliées au niveau des intersections avec des barres de l'autre famille appelées à jouer le rôle de barres de poussée (5, 6), de façon à former deux nappes de barres de poussée, reliées par des barres de liaison formant des plis en forme de V, les barres de poussée de chaque nappe étant ensuite liées à des barres de raidissement (8, 9) agencées pour supprimer tout risque d'ouverture des plis des barres de liaison.

8. Procédé de préfabrication selon l'une des revendications précédentes, caractérisé en ce que l'on réalise simultanément au moins deux panneaux creux dans deux moules séparés (13, 13'), lesdits moules étant disposés, tour à tour, l'un au-dessus de l'autre de sorte que le matériau pulvérulent (16) extrait du moule supérieur en fin de fabrication du panneau correspondant s'écoule dans le moule inférieur en vue de commencer la fabrication de l'autre panneau.

9. Procédé de préfabrication selon l'une des revendications précédentes, dans lequel, après démoulage, on fixe une seconde plaque coffrante (3) sur les barres de poussée (6) du plan coffrant demeuré apparent.

10. Procédé de préfabrication selon la revendication 12, caractérisé en ce que l'on utilise une seconde plaque coffrante (3) possédant des nervures (10) dotées d'ouvertures (10a), la fixation de la plaque coffrante (3) étant réalisée en amenant les nervures (10) de ladite plaque à chevaucher, au niveau de leurs ouvertures (10a), les barres de poussée (6) de la structure tridimensionnelle (1) et en mettant en place des organes de clavetage (11, 12) dans les nervures entre ces dernières et les barres de liaison.

11. Panneau creux préfabriqué réalisé par mise en œuvre du procédé conforme à l'une des revendications précédentes et comprenant :

une structure tridimensionnelle (1) composée de barres de poussée (5, 6) situées dans deux plans coffrants sensiblement parallèles et de barres de liaison (7) reliant lesdites barres de poussée et fixées sur celles-ci,

une plaque moulée en un matériau isolant (4), dans laquelle sont noyées les barres de poussée (5) d'un des plans coffrants, ladite plaque (4) présentant une épaisseur inférieure à celle de la structure tridimensionnelle (1) de façon à préserver un espace libre (V) du côté de l'autre plan coffrant,

caractérisé en ce qu'il comporte une plaque coffrante (2) adhérant au niveau du premier plan coffrant contre la face correspondante de la plaque d'isolant (4).

12. Panneau préfabriqué selon la revendication 11, comprenant une autre plaque coffrante (3) assujettie à l'opposé de la première sur les barres de poussée (6) du second plan coffrant.

13. Panneau préfabriqué selon l'une des revendications 11 ou 12, caractérisé en ce que la surface libre interne (4a) de sa plaque isolante (4) présente un état granuleux avec des particules d'agrégats partiellement noyées en surface de ladite plaque.

14. Installation de préfabrication pour la mise en œuvre du procédé conforme à l'une des revendications 1 à 10, comprenant au moins un moule (13) doté de joues verticales (13a) et des moyens de distribution de matière synthétique isolante, caractérisée en ce que le moule est équipé d'un fond doté, d'une part, de volets d'ouverture mobiles (14) pour l'évacuation du matériau pulvérulent, d'autre part, de moyens de soutien (15) d'une structure tridimensionnelle par son plan coffrant inférieur.

15. Installation selon la revendication 14, caractérisée en ce que les moyens de soutien précités comprennent des poutrelles (15) agencées pour soutenir les barres de poussée du plan coffrant inférieur de la structure tridimensionnelle, ces poutrelles étant portées par des organes mobiles de vérins (20) agencés pour permettre de les soulever à l'intérieur du moule.

16. Installation selon l'une des revendications 14 ou 15, caractérisée en ce que les moules sont associés à un panneau-couvercle (21) adapté pour pouvoir supporter une plaque coffrante et articulé de façon à pouvoir être rabattu sur les moules avec un renversement à 180°, ledit panneau-couvercle (21) étant équipé de moyens de retenue (23, 24) de la plaque coffrante posée sur celui-ci.

17. Installation selon l'une des revendications 14, 15 ou 16, caractérisée en ce qu'elle comprend au moins deux moules mobiles (13, 13'), portés par des moyens de guidage (25) adaptés pour permettre de les superposer de sorte que l'un des moules puisse être disposé soit au-dessus soit au-dessous de l'autre.

18. Installation de préfabrication pour la mise en œuvre du procédé conforme à l'une des revendications 1 à 10, caractérisée en ce qu'elle comprend un dispositif de pliage en vue de la réalisation d'une structure tridimensionnelle à partir d'un treillis, ledit dispositif comprenant une pluralité de chariots (30) articulés les uns à la suite des autres par des axes parallèles (32), des moyens (31) de support desdits chariots guidant ceux-ci en translation perpendiculairement à la direction de leurs axes d'articulation (32), plusieurs organes d'entraînement (33, 34) chacun adaptés pour permettre de faire pivoter un couple de chariots voisins (30a, 30b) par rapport aux chariots contigus (30c, 30d) afin de donner à l'ensemble des chariots le profil d'une ligne brisée, et des moyens de verrouillage (40) des barres à plier sur chacun des chariots.

19. Installation de préfabrication selon la revendication 18, caractérisée en ce que le dispositif de pliage comprend au niveau de l'articulation entre deux chariots (30a, 30b) appelés à pivoter, d'une part, des galets à gorge (39) adaptés pour guider les barres de liaison aux sommets de leurs plis, d'autre part, des organes de guidage (38) des barres de poussée.

20. Installation de préfabrication selon l'une des revendications 18 ou 19, caractérisée en ce que chaque organe d'entraînement d'un couple de chariots (30a, 30b) comprend un vérin (33) agencé pour agir perpendiculairement à la ligne de chariot en vue d'amorcer le soulèvement des deux chariots et un vérin (34) attelé sur les chariots contigus (30c, 30d) pour pouvoir agir dans le sens du rapprochement ou de l'écartement de ces chariots contigus.

**Claims**

1. In-factory pre-manufacturing process for hollow panels for the on-site construction of insulated buildings, the said process being of the type consisting in :

use of a 3-dimensional structure (1) composed of thrust bars (5, 6) located in two essentially parallel planes, known as shuttering planes, and of link bars, (7) joining the said thrust bars,

placing the said 3-dimensional structure (1) in a mold (13) containing a pulverulent material (16) in such a way that a part of the thickness of the structure is buried in the said material and that the other part remains above it,

moulding a synthetic insulating material (4) above the pulverulent material (16),

and, after setting of the insulating material, extracting of the pulverulent material (16) and removing the resultant panel from the mold, the said process being characterized in that the synthetic insulating material (4) which possesses adhesive properties during setting is molded in the space between the upper surface of the pulverulent material (16) and a shuttering plate (2) placed above the 3-dimensional structure (1) and maintained in contact with the latter, this insulating material (4) being molded in liquid or paste form in order to fill completely the aforementioned space, to cover completely the thrust bars (5) of the upper shuttering plane of the 3-dimensional structure (1) and a portion of the link bars (7) of the latter, the said insulating material (4) coming into contact with the aforementioned shuttering plate (2) to ensure adhesion of the said plate with the latter.

2. Pre-manufacturing process as claimed in claim 1, characterized by the insulating material being an expansible material spread in paste form on the shuttering plate (2) in appropriate quantities so as to fill, after expansion, the volume of the mold, the said shuttering plate being subsequently inverted on the mold before expansion is completed, so that the latter may spread throughout the enclosed space of the said mold.

3. Pre-manufacturing process as claimed in claim 1, characterized by the shuttering plate (2) being placed on the mold before spreading the synthetic insulating material (4) the said material being subsequently injected into the enclosed space of the mold by holes provided in the said mold.

4. Pre-manufacturing process as claimed in one of the claims 1, 2 or 3, in which the 3-dimensional structure (1) is first placed in the empty mold whose height is designed to be greater than the thickness of the said structure, characterized by the subsequent application of the pulverulent material (16) in the mold so that the total height of the 3-dimensional structure (1) is immersed, the said structure (1) then being displaced in relation to the pulverulent material (16) so as to induce its upper part to emerge from the pulverulent material (16).

5. Pre-manufacturing process as claimed in one of the claims 1, 2, 3 or 4, in which a sand-based pulverulent material (16) characterized in that the chosen pulverulent material (16) is based on unrefined sand containing aggregates, so that the free inner face (4a) of the insulating material (4) presents, upon removal from the mold, a granular state, due to adhesion of particles and aggregates of pulverulent material on the said insulating material (4).

6. Pre-manufacturing process as claimed in one of the preceding claims characterized in that at the end of expansion of the synthetic material, the pressure of the said material is measured with a resultant evacuation of pulverulent material (16) above a pre-determined pressure threshold.

7. Pre-manufacturing process as claimed in one of the preceding claims, in which the 3-dimensional structure (1) is obtained by folding a lattice-work of two families of secant bars, the bars of one of the families acting as linking bars (7) being folded at the intersection with the other family of bars, acting as thrust bars (5, 6), in order to form two layers of thrust bars, joined by V-shaped linking bars, the thrust bars of each layer being subsequently joined to stiffening bars (8, 9), designed to prevent any risk of the linking bar folds opening.

8. Pre-manufacturing process as claimed in one of the preceding claims, characterized by simultaneous production of at least 2 hollow panels in 2 separate molds (13, 13'), the said molds being placed consecutively, one above the other, so that the pulverulent material (16) extracted from the upper mold at the end of production of the corresponding panel flows into the lower mold to begin production of the other panel.

9. Pre-manufacturing process as claimed in one of the previous claims, in which, after removal from the mold, a second shuttering plate (3) is fixed upon the thrust bars (6) of the still visible shuttering plane.

10. Pre-manufacturing process as claimed in claim 9, characterized by using a second shuttering plate (3) having ribs (10) provided with openings (10a), the shuttering plate (3) being attached by overlapping the ribs (10) of the said plate, at their openings (10a) on the thrust bars (6) of the 3-dimensional structure (1) and by putting into place cottering components (11, 12) in the ribs, between the latter and the link bars.

11. Pre-manufactured hollow panel produced by using a process in accordance with one of the preceding claims and including :

a 3-dimensional structure (1) composed of thrust bars (5, 6) situated in 2 essentially parallel shuttering planes and link bars (7) joining the said thrust bars and affixed to these,

a molded plate of insulating material (4) in which the thrust bars (5) of one of the coffering planes are immersed, the said plate (4) presenting a thickness less than that of the 3-dimensional structure (1) to preserve a free space (V) on the side of the other shuttering plane, characterized by including, a shuttering plate (2) adhering at the level of the first shuttering plane to the corresponding face of the insulation plate (4).

12. Pre-manufactured panel as claimed in claim 11, including another shuttering plate (3) fastened, on the opposite side of the first, onto the thrust bars (6) of the second shuttering plane.

13. Pre-manufactured panel as claimed in one of the claims 11 or 12, characterized by the free inner surface (4a) of its insulating plate (4) presenting a granular state with particles of aggregates partially embedded on the surface of the said plate.

14. Pre-manufacturing installation for operation of the process in accordance with one of the claims 1 through 10, including at least one mold (13) provided with vertical side plates (13a) and a system of spreading the synthetic insulating material characterized by the mold having a base equipped with, on the one hand, moveable opening flaps (14) to evacuate the pulverulent material, on the other, a means of support (15) for a 3-dimensional structure *via* its lower shuttering plan.

15. Installation as claimed in claim 14, characterized by the aforementioned supports including balks (15) designed to support the lower shuttering plane thrust bars of the 3-dimensional structure, these balks being borne by mobile jack components (20) designed to allow them to be raised inside the mold.

16. Installation as claimed in claims 14 or 15, characterized by the molds being associated with a cover-plate (21) designed to be able to support a shuttering plate and hinged to be closed on to molds with an inversion of 180º, the said cover-plate (21) being equipped with devices (23, 24) for securing the frame plate placed upon the latter.

17. Installation as claimed in one of the claims 14, 15 or 16, characterized by including at least 2 moveable molds (13, 13') borne on guide rails (25) designed to allow them to be superimposed so that the molds can be placed either above or below each other.

18. Pre-manufacturing installation for the operation of the process in accordance with one of the claims 1 to 10, characterized by including a device for folding so as to construct a 3-dimensional structure from a lattice-work, the said device consisting of several carriages (30) articulated consecutively by parallel axes (32), a mounting (31) for the said carriages guiding the latter in a movement perpendicular to their articulated axes (32), several drive mechanisms (33, 34) each being designed to pivot a pair of adjacent carriages (30a, 30b) in relation to two more adjacent carriages in order to impart to the totality of the carriages a broken line profile, and a locking system (40) for the foldable bars on each carriage.

19. Pre-manufacturing installation as claimed in claim 18, characterized by the folding device at the level of the articulation between 2 carriages (30a, 30b) required to pivot comprising on the one hand, double-flanged rollers (39) designed to guide the linking bars to the maximum height of folding, on the other hand, thrust bars guidance devices (38).

20. Pre-manufacturing installation as claimed in one of the claims 18 or 19, characterized by each drive mechanism for a pair of carriages (30a, 30b) having a jack (33) designed to act perpendicularly to the line of carriages to initiate the rising movement of two carriages and a jack (34) coupled to the adjacent carriages (30c, 30d) to be able to bring together or separate these adjacent carriages.

## Patentansprüche

1. Verfahren zur Vorfertigung im Werk von Hohlplatten für die Errichtung von wärmeisolierten Bauwerken ; dieses Verfahren ist folgenden Typs :

es wird eine dreidimensionale Struktur (1) verwendet, die aus in zwei genau parallelen, als Schalungsebenen bezeichneten Ebenen angebrachten Schubstäben (5, 6) sowie aus diese Schubstäbe miteinander verbindenden Verbindungsstäben (7) besteht ;

die besagte dreidimensionale Struktur (1) wird so in eine mit feinpulverigem Material (16) gefüllte Form (13) gesetzt, daß ein Teil der Breite der Struktur in dem besagten Material verschwindet, während die restliche Breite darüber hinausragt ;

über dem feinpulverigen Material (16) wird eine synthetische Isoliermasse (4) in die Form eingebracht ;

und nach dem Aushärten der Isoliermasse (4) wird das feinpulverige Material (16) entfernt und die entstandene Platte aus der Form gehoben ; das besagte Verfahren ist dadurch gekennzeichnet, daß die synthetische Isoliermasse (4), die beim Aushärten Hafteigenschaften entwickelt, in den Hohlraum eingebracht wird, der sich zwischen der Oberfläche des feinpulverigen Materials (16) und einer über der dreidimensionalen Struktur (1) angebrachten und damit in Kontakt gehaltenen Schalungsplatte (2) befindet, wobei diese Isoliermasse (4) in flüssigem oder pastigem Zustand so in die Form eingebracht wird, daß sie den vorgenannten Hohlraum vollständig ausfüllt, wodurch die Schubstäbe (5) der oberen Schalungsebene der dreidimensionalen Struktur (1) und ein Teil ihrer Verbindungsstäbe (7) völlig darin eingebettet werden, da die besagte Isoliermasse (4) mit der vorgenannten Schalungsplatte (2) Kontakt hat, so daß diese Platte daran anhaftet.

2. Herstellungsverfahren gemäß Anspruch 1, dadurch gekennzeichnet, daß es sich bei der Isoliermasse um eine ausdehnungsfähige Masse handelt, die in pastigem Zustand in ausreichender Menge auf die Schalungsplatte (2) gestrichen wird, um nach dem Ausdehnen den Hohlraum der Form auszufüllen, worauf die besagte Schalungsplatte vor Ende des Ausdehnungsvorgangs umgedreht und auf die Form gesetzt wird, so daß die besagte Isoliermasse im abgeschlossenen Hohlraum der Form ihre endgültige Form annimmt.

3. Herstellungsverfahren gemäß Anspruch 1, dadurch gekennzeichnet, daß die Schalungsplatte (2) vor dem Aufbringen der synthetischen Isoliermasse (4) auf der Form angebracht wird, worauf diese Masse durch in der Form ausgesparte Öffnungen in den geschlossenen Innenraum der Form eingespritzt wird.

4. Herstellungsverfahren gemäß einem der Ansprüche 1, 2 oder 3, bei dem die dreidimensionale Struktur (1) zuerst in die leere Form gesetzt wird, deren Höhe größer ist als die Breite der besagten Struktur, dadurch gekennzeichnet, daß das feinpulverige Material (16) dann so in die Form geschüttet wird, daß es die dreidimensionale Struktur (1) in ihrer ganzen Höhe umschließt, worauf die besagte Struktur (1) im Vergleich zu dem feinpulverigen Material (16) so versetzt wird, daß ihr oberer Teil aus dem feinpulverigen Material (16) hervorsteht.

5. Herstellungsverfahren gemäß einem der Ansprüche 1, 2, 3 oder 4, bei dem ein feinpulveriges Material (16) auf Sandbasis verwendet wird, dadurch gekennzeichnet, daß ein feinpulveriges Material (16) auf der Basis von unverlesenem Sand, das auch Aggregate enthält, gewählt wird, so daß die freie Innenfläche (4a) der Isoliermasse (4) nach dem Entfernen der Form aufgrund des Anhaftens von Teilchen und Aggregaten des feinpulverigen Materials an dieser Isoliermasse (4) einen körnigen Zustand aufweist.

6. Herstellungsverfahren gemäß einem der vorstehenden Ansprüche, dadurch gekennzeichnet, daß nach Abschluß der Ausdehnung der synthetischen Isoliermasse der Druck dieser Masse gemessen wird und oberhalb eines zuvor festgelegten Grenzwertes feinpulveriges Material (16) abgeführt wird.

7. Herstellungsverfahren gemäß einem der vorstehenden Ansprüche, bei dem die dreidimensionale Struktur (1) durch Faltung eines aus zwei Gruppen von sich überschneidenden Stäben gebildeten Gitterwerks entsteht, wobei die Stäbe der einen Gruppe, die als Verbindungsstäbe (7) dienen sollen, in Höhe der Schnittpunkte mit den Stäben der anderen Gruppe, die als Schubstäbe (5, 6) dienen sollen, so geknickt werden, daß zwei Lagen von Schubstäben entstehen, die durch V-förmig geknickte Verbindungsstäbe miteinander verbunden sind ; die Schubstäbe dieser beiden Lagen sind mit Versteifungsstäben (8, 9) verbunden, die so angebracht sind, daß sich die Knicke der Verbindungsstäbe auf keinen Fall öffnen können.

8. Herstellungsverfahren gemäß einem der vorstehenden Ansprüche, dadurch gekennzeichnet, daß gleichzeitig mindestens zwei Hohlplatten in zwei getrennten Formen (13, 13') hergestellt werden, wobei diese Formen wechselweise übereinander gelegt werden, so daß das am Ende der Herstellung der entsprechenden Platte aus der oberen Form entfernte feinpulverige Material (16) in die untere Form läuft, so daß mit der Herstellung der anderen Platte begonnen werden kann.

9. Herstellungsverfahren gemäß einem der vorstehenden Ansprüche, bei dem nach der Entnahme aus der Form an den Schubstäben (6) der freiliegenden Schalungsebene eine zweite Schalungsplatte (3) befestigt wird.

10. Herstellungsverfahren gemäß Anspruch 9, dadurch gekennzeichnet, daß eine zweite Schalungsplatte (3) mit mit Öffnungen (10a) versehenen Rippen (10) verwendet wird, welche dadurch befestigt wird, daß ihre Rippen (10) in Höhe ihrer Öffnungen (10a) die Schubstäbe (6) der dreidimensionalen Struktur (1) überschneiden und in den Rippen zwischen diesen und den Verbindungsstäben Verkeilungselemente (11, 12) angebracht werden.

11. Vorgefertigte Hohlplatte, die mit Hilfe des einem der vorstehenden Ansprüche entsprechenden Verfahrens hergestellt wurde und sich aus forgenden Bestandteilen zusammensetzt :

einer dreidimensionalen Struktur (1), die sich aus in zwei genau parallelen Schalungsebenen angebrachten Schubstäben (5, 6) sowie aus diese Schubstäbe miteinander verbindenden und daran befestigten Verbindungsstäben (7) zusammensetzt ;

einer aus einem isolierenden Material geformten Platte (4), in welche die Schubstäbe (5) einer der Schalungsebenen eingelassen sind ; die Breite dieser Platte (4) ist geringer als diejenige der dreidimensionalen Struktur (1), so daß auf der Seite der anderen Schalungsebene ein freier Raum (V) bleibt ;

dadurch gekennzeichnet, daß sie eine Schalungsplatte (2) besitzt, die in Höhe der ersten Schalungsebene an der entsprechenden Fläche der Platte aus Isoliermaterial (4) haftet.

12. Vorgefertigte Platte gemäß Anspruch 11, die eine auf der der ersten Schalungsplatte gegenüberliegenden Seite an den Schubstäben (6) der zweiten Schalungsebene befestigte zweite Schalungsplatte (3) besitzt.

13. Vorgefertigte Platte gemäß einem der Ansprüche 11 oder 12, dadurch gekennzeichnet, daß die freie Innenfläche (4a) ihrer Isolierplatte (4) einen körnigen Zustand mit teilweise in der Oberfläche der besagten Platte eingelassenen Aggregatteilchen aufweist.

14. Vorrichtung zur Ausführung des Verfahrens gemäß einem der Ansprüche 1 bis 10, die mindestens eine Form (13) mit senkrechten Seitenwänden (13a) und eine Vorrichtung zur Aufbringung von synthetischer Isoliermasse besitzt, dadurch gekennzeichnet, daß diese Form mit einem Boden versehen ist, der einerseits bewegliche Öffnungsklappen (14) zur Ableitung des feinpulverigen Materials und andererseits eine Haltevorrichtung (15) für eine dreidimensionale Struktur an ihrer unteren Schalungsebene besitzt.

15. Vorrichtung gemäß Anspruch 14, dadurch gekennzeichnet, daß die vorgenannte Haltevorrichtung aus die Schubstäbe der unteren Schalungsebene der dreidimensionalen Struktur tragenden Trägern (15) besteht, welche von den beweglichen Organen von Hebeböcken (20) getragen werden, mit deren Hilfe sie im Inneren der Form nach oben bewegt werden können.

16. Vorrichtung gemäß einem der Ansprüche 14 oder 15, dadurch gekennzeichnet, daß die Formen einen Deckel (21) besitzen, der eine Schalungsplatte tragen kann und so gelagert ist, daß er mit einer Kippung um 180° auf die Formen geklappt werden kann ; dieser Deckel (21) ist mit Mitteln (23, 24) zur Befestigung der darauf angebrachten Schalungsplatte versehen.

17. Vorrichtung gemäß einem der Ansprüche 14, 15 oder 16, dadurch gekennzeichnet, daß sie mindestens zwei bewegliche Formen (13, 13') besitzt, welche mittels Führungsmitteln (25) so angebracht sind, daß sie übereinandergesetzt werden können, so daß eine der Formen entweder über oder unter der anderen angebracht werden kann.

18. Vorrichtung zur Ausführung des Verfahrens gemäß einem der Ansprüche 1 bis 10, dadurch gekennzeichnet, daß sie eine Biegevorrichtung zur Herstellung einer dreidimensionalen Struktur aus einem Gitterwerk besitzt ; diese beinhaltet eine große Anzahl von hintereinander an parallelen Achsen aufgehängten Schlitten (30), Halterungen (31) für diese Schlitten, die diese senkrecht zur Richtung ihrer Aufhängungsachsen (32) verschieben, mehrere Antriebsorgane (33, 34), von denen jedes ein Paar benachbarter Schlitten (30a, 30b) im Verhältnis zu den angrenzenden Schlitten (30c, 30d) schwenkt, so daß die Gesamtheit der Schlitten eine unterbrochene Linie bildet, sowie Vorrichtungen (40) zur Befestigung der zu biegenden Stäbe auf jedem der Schlitten.

19. Vorrichtung gemäß Anspruch 18, dadurch gekennzeichnet, daß die Biegevorrichtung in Höhe des Gelenks zwischen zwei schwenkbaren Schlitten (30a, 30b) einerseits Rollen (39) mit Rille besitzt, um die Verbindungsstäbe am Scheitelpunkt ihres Knicks zu führen, sowie andererseits Führungseinrichtungen (38) für die Schubstäbe.

20. Vorrichtung gemäß einem der Ansprüche 18 oder 19, dadurch gekennzeichnet, daß jedes Antriebsorgan für ein Paar von Schlitten (30a, 30b) einen senkrecht zur Schlittenlinie wirkenden Hebebock (33) besitzt, um das Anheben der beiden Schlitten einzuleiten, sowie einen an den benachbarten Schlitten (30c, 30d) befestigten Zylinder (34), um diese benachbarten Schlitten einander anzunähern oder voneinander zu entfernen.

Fig. 1

Fig. 2

0 094 465

Fig. 3

Fig. 4

Fig. 5

0 094 465

Fig. 6a

Fig. 6b

Fig.7

Fig. 8

0 094 465

Fig. 9

Fig.10

0 094 465

Fig.11

Fig.12

Fig. 13

Fig. 14

Fig. 15

38 38a 39 30b 30a 35 33 36 34 31 30 42 40 40b 41 43 30c 30d